(19) Europäisches Patentamt
European Patent Office
Office européen des brevets

(11) **EP 2 610 814 A1**

(12) **EUROPEAN PATENT APPLICATION**
published in accordance with Art. 153(4) EPC

(43) Date of publication:
**03.07.2013 Bulletin 2013/27**

(51) Int Cl.:
*G06T 15/50* (2011.01)      *G06T 17/00* (2006.01)

(21) Application number: **10856465.9**

(22) Date of filing: **27.08.2010**

(86) International application number:
**PCT/KR2010/005766**

(87) International publication number:
**WO 2012/026640 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicants:
• **Siliconarts, Inc.**
**Seoul 134-030 (KR)**
• **Industry-Academia Cooperation Group Of Sejong University**
**Seoul 143-747 (KR)**

(72) Inventors:
• **PARK, Woo-chan**
**Seoul 110-080 (KR)**
• **YOON, Hyung-min**
**Seoul 138-050 (KR)**

(74) Representative: **Delorme, Nicolas et al**
**Cabinet Germain & Maureau**
**BP 6153**
**69466 Lyon Cedex 06 (FR)**

(54) **METHOD FOR SELECTING MIP-MAP LEVEL AND SYSTEM FOR TEXTURE MAPPING USING SAME**

(57)     A method for selecting a MIP-map level is used for Texture Mapping based on Global Illumination. The method for selecting the MIP-map level confirms Object information on at least one object on a screen. The object information can include the number, shape, and the composition of objects on the screen, and/or the spatial position of a relevant object on the screen. Based on the object information, a MIP-map level selection algorithm is determined. The MIP-map level selection algorithm includes ray tracing and/or distance measuring, wherein the ray tracing selects the MIP-map based on the Differential value of adjacent rays, and the distance measuring can select a MIP-map by calculating the distance at which the ratio of pixels and texels reach 1:1. Based on the determined method, the MIP-map level is selected.

[Fig. 1]

EP 2 610 814 A1

**Description**

[Technical Field]

The disclosed technology relates to a method of selecting a MIP-MAP level and a texture mapping system using the same, and, more particularly, to a method of selecting the MIP-MAP levels of texture images and a texture mapping system using the same.

[Background Art]

Texture mapping is a scheme for drawing detailed texture or painting a color on a surface of a virtual 3-dimensional object in the computer graphics field. In texture mapping, Mathematical Equation or a 2-dimensional picture can be drawn on a surface of a 3-dimensional object by using several kinds of methods as if the math formula or the 2-dimensional picture looks feel like a real object.

A MIP-MAP is for improving the rendering speed in the texture mapping field of 3-dimensional graphics and composed of a basic texture and textures consecutively reduced from the basic texture.

[Detailed Description of the Invention]

From among embodiments, a method of selecting a MIP-MAP level for a global illumination based texture mapping. In the method of selecting a MIP-MAP level, object information about at least one object in a screen is identified. The object information may include the number of at least one object, shape(s) of the at least one object, material(s) of the at least one object in the screen and/or location(s) of a corresponding object on a space in the screen. A M I P-MAP level selection algorithm is determined based on the object information. The MIP-MAP level selection algorithm may include a differential method and/or a distance measuring method, the differential method may select a MIP-MAP based on the differential values of adjacent rays, and the distance measuring method may select a MIP-MAP by calculating a distance in which a ratio of a pixel and a texel becomes 1:1. A MIP-MAP level is selected based on the determined method. In one embodiment, the demand an image quality and/or a processing speed for an image to be provided may be identified. The MIP-MAP level selection algorithm may be determined based on a result of the identification. For example, when, as a result of the identification, the demand level of the image quality for the corresponding image is higher, the differential method may be selected as the MIP-MAP level selection algorithm. For another example, when, as a result of the identification, the demand level of the processing speed for the corresponding image is higher, the distance measuring method may be selected as the MIP-MAP level selection algorithm. In one embodiment, the method of selecting a MIP-MAP level includes calculating a size of a pixel for a texel based on a size of a texture and a size of a screen, calculating the number of texels included in a triangle based on texture coordinates corresponding to three vertexes of the triangle of the texture, calculating a size of the triangle based on the calculated size of the pixel and the calculated number of the texels, calculating the size of a given triangle based on model coordinates corresponding to the three vertexes of the given triangle, and calculating a distance in which a ratio of a pixel and a texel becomes 1:1 based on the two calculated values for the size of the triangle.

From among the embodiments, a texture mapping system using a method of selecting a MIP-MAP level includes an object information storage unit, an object information identification unit, an algorithm determination unit, a distance measuring method operation unit, and a MIP-MAP level selection unit. The object information storage unit stores object information about an object to be displayed in a screen. The object information may include the number of objects and the shapes and materials of the objects present in the screen and/or the locations of the corresponding objects on the space appearing in the screen. The object information identification unit fetches object information about a target object to be displayed in the screen from the object information storage unit and identifies the fetched object. The algorithm determination unit analyzes the object information fetched from the object information identification unit and determines an algorithm for selecting a MIP-MAP level based on the analyzed object information. The distance measuring method operation unit receives the object information of the target object from the object information identification unit and calculates a distance in which a ratio of a pixel and a texel becomes 1 :1 according to a result of the determination of the algorithm determination unit. The MIP-MAP level selection unit selects the MIP-MAP level based on the distance calculated by the distance measuring method operation unit. In one embodiment, the distance measuring method operation unit may calculate the size of a pixel for a texel based on a size of a texture and a size of a screen, calculate the number of texels included in a triangle based on texture coordinates corresponding to three vertexes of the triangle of the texture, calculates the size of the triangle based on the calculated size of the pixel and the calculated number of the texels, calculates the size of a given triangle based on model coordinates corresponding to the three vertexes of the given triangle, and calculates a distance in which a ratio of a pixel and a texel becomes 1:1 based on the two calculated values for the size of the triangle. The texture triangle can include a unit triangle that forms the texture, and texture coordinates can include 2-dimensional coordinates. In one embodiment, the texture mapping system using a method of selecting a MIP-MAP level further includes a differential method operation unit for receiving the object information of the target object from the object information identification unit and calculating the differential value of a ray according to the determination of the algorithm determination unit, wherein the MIP-MAP level selection unit may select the MIP-MAP level based on the differential value calculated by the differential method operation unit.

From among the embodiments, a texture mapping system using a method of selecting a MIP-MAP level includes a pre-processing unit, a triangle information storage unit, a comparison distance fetching unit, a ray information storage unit, a final distance calculation unit, and a MIP-MAP level selection unit. The pre-processing unit calculates a comparison distance in which a ratio of a pixel and a texel becomes 1:1 by a distance measuring method. The triangle information storage unit maps information about a primitive triangle to the comparison distance calculated by the pre-processing unit and stores the mapped information and comparison distance. The comparison distance fetching unit receives the number of the primitive triangle to be subject to texture conversion and fetches the comparison distance of the primitive triangle corresponding to the corresponding number from the triangle information storage unit. The ray information storage unit accumulates and stores pieces of the information about a distance of a ray. The final distance calculation unit sums up a distance up to a triangle hit by a current ray from a staring point and the distance accumulated and stored in the ray information storage unit. The MIP-MAP level selection unit selects a MIP-MAP level based on the distance summed up by the final distance calculation unit. In one embodiment, the pre-processing unit calculates the size of a pixel for a texel based on the size of a texture and a size of a screen, calculates the number of texels included in a triangle based on texture coordinates corresponding to three vertexes of the triangle of the texture, calculates the size of the triangle based on the calculated size of the pixel and the calculated number of the texels, calculates the size of a given triangle based on model coordinates corresponding to the three vertexes of the given triangle, and calculates a distance in which a ratio of a pixel and a texel becomes 1:1 based on the two calculated values for the size of the triangle. The texture triangle can include a unit triangle that forms the texture, and texture coordinates can include 2-dimensional coordinates. In one embodiment, the texture mapping system using the method of selecting a MIP-MAP level can further include a texture information storage unit for storing information about the texture, a texture information fetching unit for receiving a texture identifier and fetching the information about the texture corresponding to the texture identifier from the texture information storage unit, and a filtering unit for mapping the texture fetched by the texture information fetching unit to a corresponding primitive.

[Description of Drawings]

FIG. 1 is a block diagram illustrating an example of a texture mapping system using a method of selecting a MIP-MAP level of the disclosed technology.
FIG. 2 is a flowchart illustrating the method of selecting a MIP-MAP level that is executed in the texture mapping system of FIG. 1.
FIG. 3 is a diagram illustrating the principle of a ray tracing method that is a basis for a differential method and a distance measuring method of FIG. 2.
FIG. 4 is a flowchart illustrating the differential method of FIG. 2.
FIG. 5 is a diagram illustrating the principle of the distance measuring method of FIG. 2.
FIG. 6 is a flowchart illustrating the distance measuring method of FIG. 2.
FIG. 7 is a block diagram illustrating another example of the texture mapping system using the method of selecting a MIP-MAP level of the disclosed technology.
FIG. 8 is a diagram illustrating the texture mapping of a filtering unit of FIG. 7.
FIG. 9 is a diagram showing examples of a model used in the experiments of the method of selecting a MIP-MAP level of the disclosed technology.
FIG. 10 is a graph showing the measurement of the selection ratio of a MIP-MAP level for each image in FIG. 9.
FIG. 11 is a graph showing the measurement of a cache miss rate for the size of a cache for each image in FIG. 9.
FIG. 12 is a graph showing the measurement of a cache miss rate for the size of a block in each image of FIG. 9.
FIG. 13 is a graph showing the measurement of a cache miss rate for association between the size of a cache and the size of a block in each image of FIG. 9.

[Best Mode for Implementing the Invention]

A description of the disclosed technology is only embodiments for structural and/or functional descriptions. The scope of the disclosed technology should not be construed as being limited to the following embodiments. That is, the embodiments may be modified in various forms, and the scope of the disclosed technology should be understood as including equivalents which may realize the technical spirit.
Meanwhile, the meanings of terms described in this application should be understood as follows.

Terms, such as the "first" and the "second", are used to distinguish one element from the other element, and the scope of the disclosed technology should not be restricted by the terms. For example, a first element may be named a second element. Likewise, a second element may be named a first element.

A term "and/or" should be understood to include all combinations which may be presented from one or more related items. For example, "a first item, a second item and/or a third item" means "at least one of the first item, the second item, and the third item" and means a combination of all items which may be presented from two or more of not only the first, second, or third item, but also the first, the second, and the third items.

When it is said that one element is described as being "connected" to the other element, the one element may be directly connected to the other element, but it should be understood that a third element may be interposed between the two elements. In contrast, when it is said that one element is described as being "directly connected" to the other element, it should be understood that a third element is not interposed between the two elements. Meanwhile, the same principle applies to other expressions, such as "between ~" and "just between ~" or "adjacent to ~" and "adjacent just to ~", which describe a relation between elements.

An expression of the singular number should be understood to include plural expressions, unless clearly expressed otherwise in the context. Terms, such as "include" or "have", should be understood to indicate the existence of a set characteristic, number, step, operation, element, part, or a combination of them and not to exclude the existence of one or more other characteristics, numbers, steps, operations, elements, parts, or a combination of them or a possibility of the addition of them.

In each of steps, symbols (e.g., a, b, and c) are used for convenience of description, and the symbols do not describe order of the steps. The steps may be performed in order different from order described in the context unless specific order is clearly described in the context. That is, the steps may be performed according to described order, may be performed substantially at the same time, or may be performed in reverse order.

All terms used herein, unless otherwise defined, have the same meanings which are commonly understood by those having ordinary skill in the art. In general, terms, such as ones defined in dictionaries, should be interpreted as having the same meanings as terms in the context of relevant technology, and should not be interpreted as having ideal or excessively formal meanings unless clearly defined in this application.

A ray tracing method, that is, one of methods of a graphic processor selecting a MIP-MAP level for texture mapping, is a method of generating a ray for each pixel and inversely tracing triangle that affects the corresponding ray. In this ray tracing method, a global illumination effect can be made possible. For example, a shadow effect, a reflection effect, a refraction effect, and a transparent effect can be basically provided.

In one embodiment, the method of selecting a MIP-MAP level based on the ray tracing method includes a method based on a "ray differential" value. The ray tracing method has chiefly been applied to offline processing because it requires a massive computational load, but recently can also be applied to real-time processing with the development of semiconductor technology.

In another embodiment, in a method of selecting a MIP-MAP level, the level of the texture MIP-MAP of an object can be selected by calculating a distance value between a point of time of each primitive and the level '0' of a MIP-MAP for the corresponding primitive and a value for the amount of a change of a texel against the amount of a change of a pixel when pre-processing is performed and using a value calculated when pre-processing is performed on the corresponding object that crosses the ray when rendering is performed and the length value of the entire ray calculated by "on-the-fly". This distance measuring method can reduce a computational load as compared with the ray tracing method.

Consequently, in the disclosed technology, a MIP-MAP can be selected by using the ray tracing method or the distance measuring method according to the characteristics of a desired image, for example, image quality for the image to be provided and/or the demand level of the processing speed.

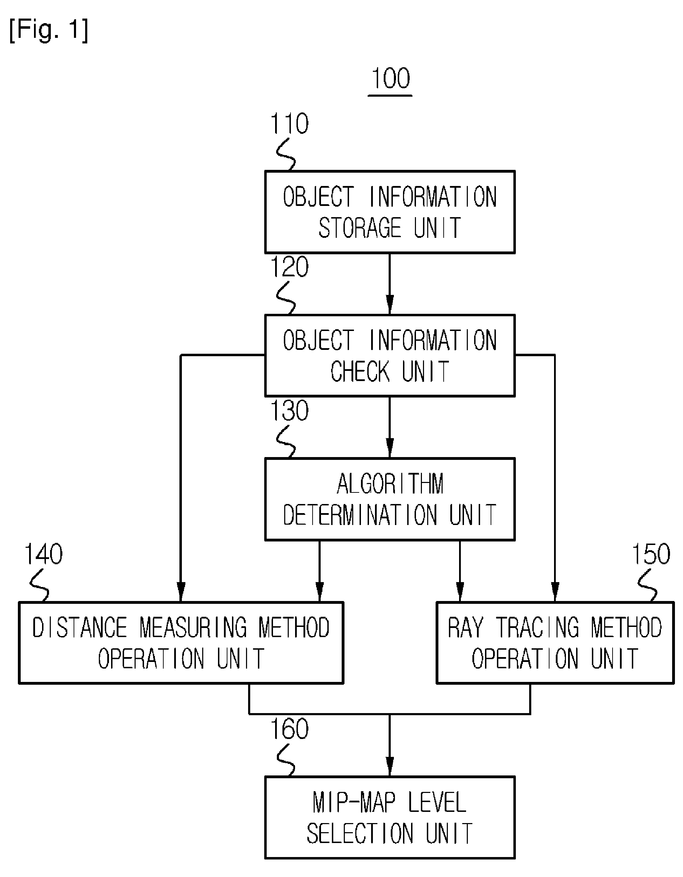

FIG. 1 is a block diagram illustrating an example of a texture mapping system using a method of selecting a MIP-MAP level of the disclosed technology.

Referring to FIG. 1, the texture mapping system 100 using the method of selecting a MIP-MAP level includes an object information storage unit 110, an object information identification unit 120, an algorithm determination unit 130, a distance measuring method operation unit 140, a ray tracing method operation unit 150, and a MIP-MAP level selection unit 160.

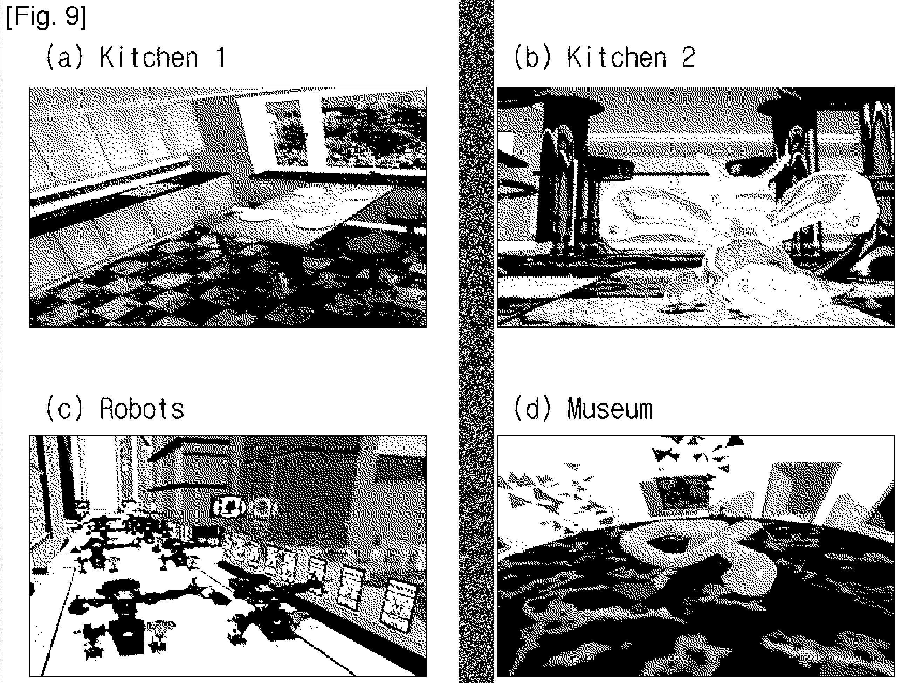

The object information storage unit 110 stores object information about an object to be displayed in a screen. In one embodiment, the object information can include the number of objects and the shapes and materials of the objects that are present in a screen and/or the locations of the corresponding objects on a space that appears in the screen. For example, the object can include a dining table, a chair, a window, and a sink shown in FIG. 9(a).

The object information identification unit 120 fetches object information about a target object to be displayed in a screen from the object information storage unit 110 and identifies the fetched object.

The algorithm determination unit 130 analyzes the object information fetched by the object information identification unit 120 and determines an algorithm for selecting a MIP-MAP level based on a result of the analysis. For example, the algorithm for selecting the MIP-MAP level can include a differential method and/or a distance measuring method. In one embodiment, the algorithm determination unit 130 can identify the demand levels of image quality and/or the processing speed for an image to be provided, select the distance measuring method operation unit 140 when the demand level of the processing speed is higher, and select the differential method operation unit 150 when the demand level of the image quality is higher.

The distance measuring method operation unit 140 performs pre-processing for selecting the MIP-MAP level according to the distance measuring method algorithm. In one embodiment, the distance measuring method operation unit 140 can receive the object information of the target object from the object information identification unit 120 and calculate a distance in which a ratio of a pixel and a texel becomes 1:1 based on a result of the determination of the algorithm determination unit 130. For example, the distance measuring method operation unit 140 can calculate the size of a texel for a pixel, calculate the number of texels included in a texture triangle for the three vertexes of the texture triangle, calculate the size of the pixel for the triangle consisting of the texels based on the calculated number of texels, calculate the size of the triangle for the three vertexes, and calculate the distance in which a ratio of a pixel and a texel becomes 1:1 based on the calculated size of the triangle. The texture triangle can include a unit triangle that forms a texture, and texture coordinates can include 2-dimensional coordinates.

The differential method operation unit 150 receives the object information of the target object from the object information identification unit and calculates the differential value of a ray according to the determination of the algorithm determination unit 130.

The MIP-MAP level selection unit 160 selects a MIP-MAP level based on the distance calculated by the distance measuring method operation unit 140 or the differential value calculated by the ray tracing method operation unit 150. In one embodiment, a method that is used the most when selecting the MIP-MAP level can be to use a ratio of the amounts of a changes pixel and texel for a long axis in a texture space. For example, the MIP-MAP level can be selected based on Mathematical Equation below 1.

(Mathematical Equation 1)

$$lod = \log_2(\max(|du|, |dv|))$$

Here, (du, dv) is an increment vector value for a texture coordinate system (u,v) when a texture space is mapped in the screen space of a corresponding pixel. It can be seen that a greater value from among increment vector values is selected by Mathematical Equation 1.

Meanwhile, if an image is extended in texture mapping, an "interpolation" scheme can be used. If an image is reduced, picture quality is severely deteriorated. Accordingly, in the disclosed technology, a greater value from among the increment vector values can be selected, and an "LOD" having a higher level (i.e., a selected image having a smaller size) can be selected.

In the texture mapping system 100 using the method of selecting a MIP-MAP level, the MIP-MAP level selection unit 160 can perform texture mapping based on a selected MIP-MAP.

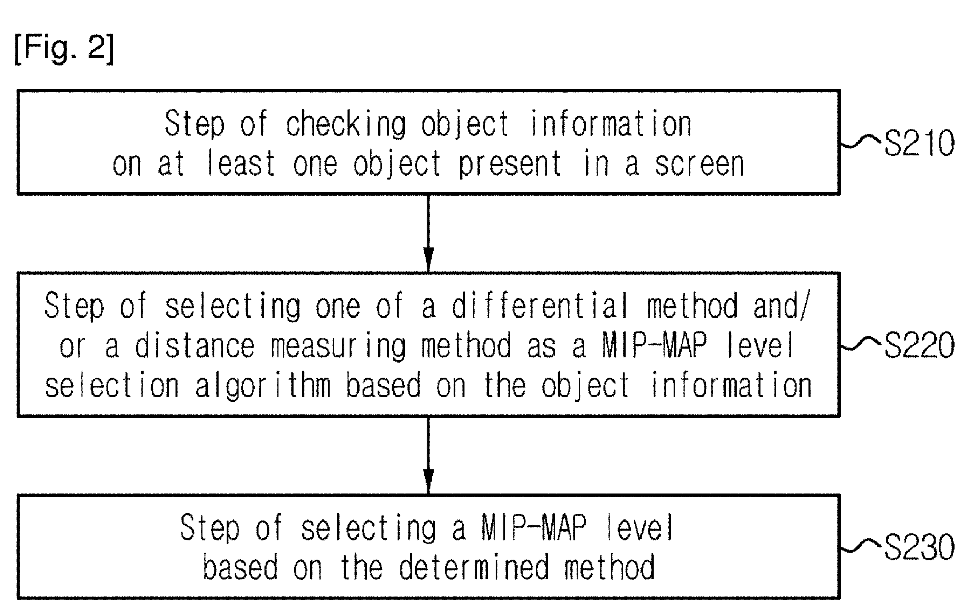

FIG. 2 is a flowchart illustrating the method of selecting a MIP-MAP level that is executed in the texture mapping system of FIG. 1.

In FIG. 2, in the method of selecting a MIP-MAP level for a global illumination based texture mapping, first, object information about at least one object that is present in a screen is identified (step S210). In one embodiment, the object information can include the number of objects and the shapes and materials of the objects that are present in a screen and/or the locations of the corresponding objects on a space that appears in the screen.

Next, a MIP-MAP level selection algorithm is determined based on the object information (step S220). In one embodiment, the MIP-MAP level selection algorithm can include a differential method and/or a distance measuring method. For example, in the differential method, a MIP-MAP can be selected based on the differential values of adjacent rays. In the distance measuring method, a distance in which a ratio of a pixel and a texel becomes 1:1 can be calculated and a MIP-MAP can be selected based on the calculated distance. In one embodiment, the demand levels of image quality and/or the processing speed for an image to be provided can be identified, and the MIP-MAP level selection algorithm can be determined based on a result of the identification. For example, when the demand level of image quality for a corresponding image is higher, the differential method can be selected as the MIP-MAP level selection algorithm. In another embodiment, when the demand level of the processing speed for an image is higher, the distance measuring method can be selected as the MIP-MAP level selection algorithm.

Finally, a MIP-MAP level is selected based on the determined method (step S230).

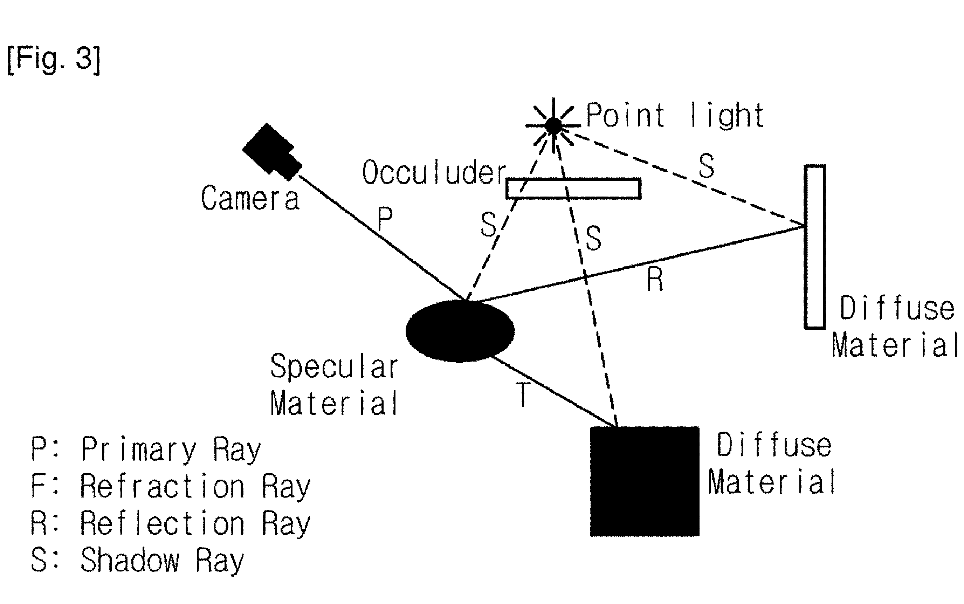

FIG. 3 is a diagram illustrating the principle of the ray tracing method that is a basis for the differential method and the distance measuring method of FIG. 2.

Referring to FIG. 3, a "Primary Ray" for a specific pixel included in any one object is generated from a point of time of a camera, and calculation for searching for an object that meets the "Primary Ray" is performed. For example, if an object that meets the "Primary Ray" has reflection or refraction properties, a "Reflection Ray" for a reflection effect or a "Refraction Ray" for a refraction effect is generated at a location where the "Primary Ray" meets the object, and a "Shadow Ray" is generated in the direction of point light for a shadow effect. Here, if the "Shadow Ray" toward the direction of the corresponding point light meets any object, a shadow is generated. If not, a shadow is not generated. The "Reflection Ray" and the "Refraction Ray" are called "Secondary Rays", and calculation for searching for an object that meets the "Secondary Ray" can be continuously performed.

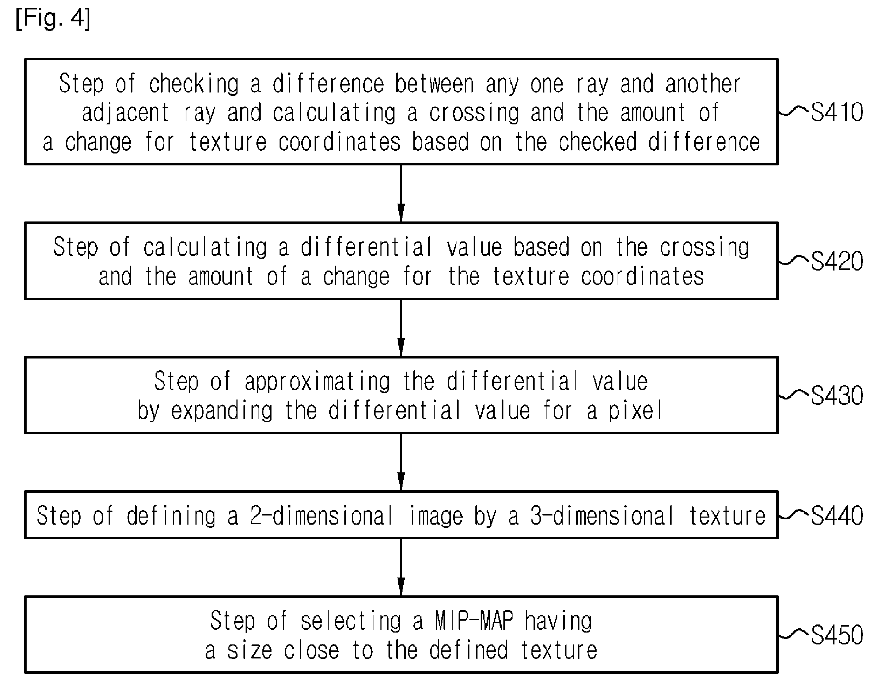

FIG. 4 is a flowchart illustrating the differential method of FIG. 2.

Referring to FIG. 4, in a method of selecting a MIP-MAP level by using the ray tracing method and mapping a texture, a difference between any one ray and another adjacent ray can be checked based on the principle of FIG. 3, and a crossing and the amount of a change for texture coordinates can be calculated based on the checked difference (step S410), and a differential value can be calculated based on the crossing and the amount of a change for the texture coordinates (step S420). Next, the differential value can be approximated by expanding the differential value for a pixel (step S430), and a 2-dimensional image can be defined by a 3-dimensional texture (step S440), and a MIP-MAP having a size close to the defined texture can be selected (step S450).

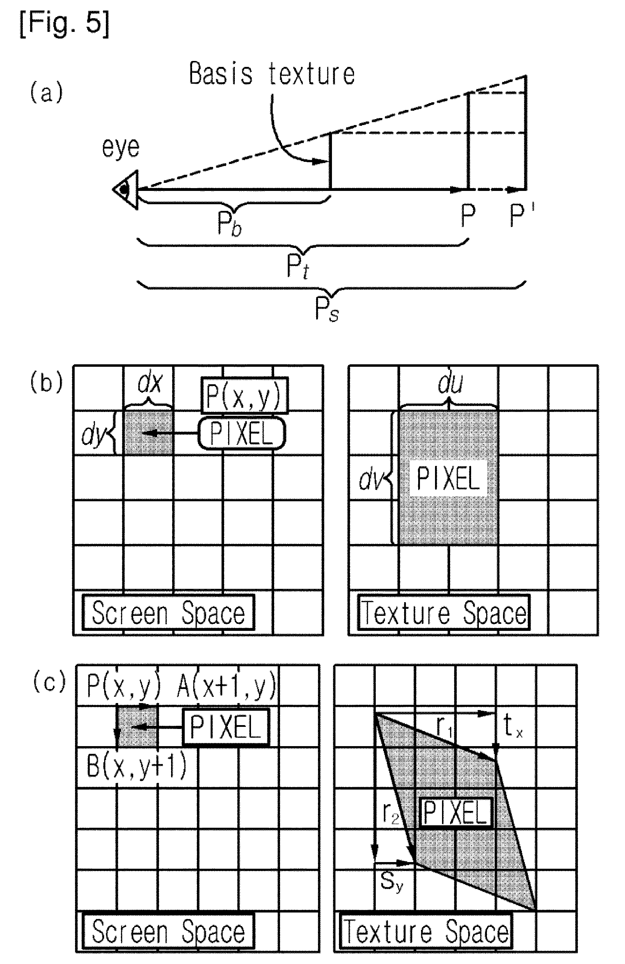

FIG. 5 is a diagram illustrating the principle of the distance measuring method of FIG. 2.

Referring to FIG. 5(a), a distance "$P_b$" at a point of time at which a texture having a triangle becomes a basis texture having a MIP-MAP level of 0 can be calculated. The distance means a part in which the size of a pixel and a ratio of a texels become 1:1 and is a relative distance with the point of time. Thus, the distance may not be related to the location of the point of time. If information about the vertex of the corresponding triangle is not changed, the "$P_b$" value may not be changed.

If the length of a ray for the corresponding triangle that crosses the ray is "$P_\ell$" and the corresponding triangle is vertical to a vector at the point of time, a MIP-MAP level for the texture of the corresponding triangle can be calculated by Mathematical Equation below 2.

(Mathematical Equation 2)

$$lod = \log_2\left(\frac{P_S}{P_b}\right) = \log_2\left(\frac{P_\ell \times S}{P_b}\right) = \log_2(P_\ell) + \log_2(S) - \log_2(P_b)$$

$$S = \max(du_b, \, dv_b)$$

Here, $P_S$ is a result of multiplying $P_\ell$ by S, and S refers to the amount of a change that is a basis at the location $P_b$. In one embodiment, S refers to a greater value, from among the amounts of a change of the two axes (u,v) of a texel for the two coordinate axes (x,y) of a pixel. In one embodiment, if values are asymmetrically changed as shown in FIGS. 5(b) and 5(c), they mean greater values dv and $r_2$ from among the changed values.

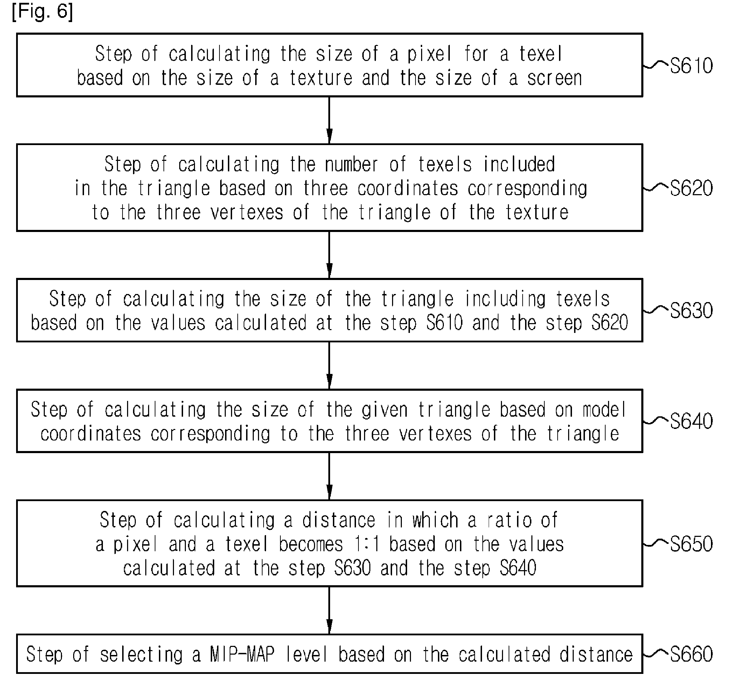

FIG. 6 is a flowchart illustrating the distance measuring method of FIG. 2.

Referring to FIG. 6, in the method of selecting a MIP-MAP level according to the distance measuring method,

the size of a pixel for a texel can be calculated based on the size of a texture and the size of a screen (step S610). For example, the size of a pixel for a texel can be calculated by Mathematical Equation below 3.

(Mathematical Equation 3)

$$X_{PS} = \frac{Texturesize}{Resolution}$$

Here, "$X_{PS}$" is the size of the texel for the pixel, "Texturesize" is the size of the texture, and "Resolution" is the size of the screen that is displayed. If texture coordinates corresponding to the three vertexes of the triangle of the texture are $(s_0, t_0)$, $(s_1, t_1)$, and $(s_2, t_2)$, the number of texels included in the triangle can be calculated based on the three coordinates (step S620). For example, the size can be calculated by Mathematical Equation below 4.

(Mathematical Equation 4)

$$T_{XN} = \frac{((s_0 \cdot t_1) + (s_1 \cdot t_2) + (s_2 \cdot t_0) - (t_0 \cdot s_1) - (t_1 \cdot s_2) - (t_2 \cdot s_0))}{2} \cdot Texturesize$$

Here, "$T_{XN}$" is the number of texels included in the triangle.

The size of the triangle including texels can be calculated based on the values calculated at the step "S61 0" and the step "S620" (step S630). For example, the size of the texel can be calculated by Mathematical Equation below 5.

(Mathematical Equation 5)

$$T_{XS} = T_{XN} \cdot T_{PS}$$

Here, "$T_{XS}$" is the size of the triangle including texels, and "$T_{XN}$" is the number of texels.

If model coordinates corresponding to the three vertexes of the given triangle are $(x_0, y_0, z_0)$, $(x_1, y_1, z_1)$, and $(x_2, y_2, z_2)$, the size of a triangle can be calculated based on the three coordinates (step S640). For example, the size of the triangle can be calculated by Mathematical Equation below 6.

(Mathematical Equation 6)

$$(x_t, y_t, z_t) = \{(x_1, y_1, z_1) - (x_0, y_0, z_0)\} \times \{(x_2, y_2, z_2) - (x_0, y_0, z_0)\}$$

$$T_{area} = \sqrt{x_t^2 + y_t^2 + z_t^2}$$

Here, "$T_{area}$" is the size of the triangle.

A distance in which a ratio of a pixel and a texel becomes 1:1 can be calculated based on the values calculated at the step "S630" and the step "S640" (step S650). For example, the distance in which a ratio of a pixel and a texel becomes 1:1 can be calculated by Mathematical Equation below 7.

(Mathematical Equation 7)

$$P_b = \sqrt{\frac{T_{XS}}{T_{area}}}$$

Here, "$P_b$" is the distance in which a ratio of a pixel and a texel becomes 1:1, "$T_{XS}$" is an actual size of the texel, and "$T_{area}$" is the size of the triangle.

A MIP-MAP level can be selected by Mathematical Equation 1 based on the calculated distance (step S660).

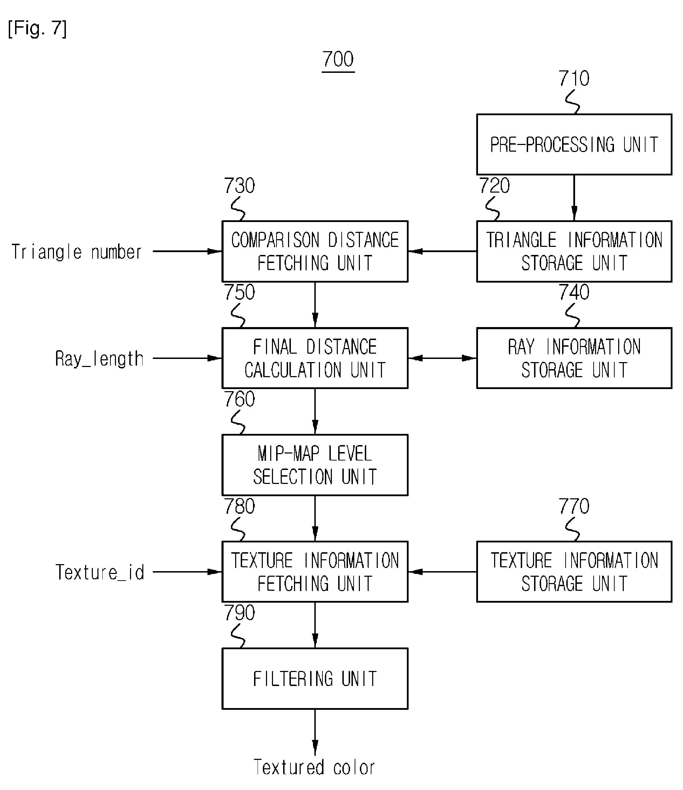

FIG. 7 is a block diagram illustrating another example of the texture mapping system using the method of selecting a MIP-MAP level of the disclosed technology.

Referring to FIG. 7, the texture mapping system 700 using the method of selecting a MIP-MAP level includes a pre-processing unit 710, a triangle information storage unit 720, a comparison distance fetching unit 730, a ray information storage unit 740, a final distance calculation unit 750, a MIP-MAP level selection unit 760, a texture information storage unit 770, a texture information fetching unit 780, and a filtering unit 790.

The pre-processing unit 710 can calculate a comparison distance where a ratio of a pixel and a texel becomes 1:1 for every triangle by using the distance measuring method of FIG. 6, and the calculated comparison distance can be stored in the triangle information storage unit 720.

The triangle information storage unit 720 maps information about a primitive triangle to the comparison distance calculated by the pre-processing unit and stores the mapped information and comparison distance.

The comparison distance fetching unit 730 receives the number of the primitive triangle that will be subject to texture conversion and fetches the comparison distance of the primitive triangle, corresponding to the corresponding number, from the triangle information storage unit 720. In one embodiment, the number of the triangle can be assigned to a triangle that has now been hit by a ray from a starting point.

The ray information storage unit 740 accumulates and stores pieces of information about the distance of the ray. In one embodiment, the information about the distance of the ray can include "$P_\ell$" that has been accumulated and stored before. When the reflection and refraction of the ray are generated at the same time, the ray information storage unit 740 can "push" information about one ray in a stack and perform ray tracing on the other ray. If this process is terminated, the ray information storage unit 740 can "pop" information about the ray that is at the top of the stack and can trace the ray through the popped information.

The final distance calculation unit 750 sums up a distance up to a triangle not hit by a ray from a stating point and the distance that has been accumulated and stored in the ray information storage unit 740.

The MIP-MAP level selection unit 760 selects a MIP-MAP level based on the distance summed up by the final distance calculation unit.

The texture information storage unit 770 stores information about the texture. In one embodiment, the information about the texture can include the color, brightness, and color and alpha data of the corresponding texture.

The texture information fetching unit 780 receives a texture identifier Texture_id to be converted and fetches information about the texture corresponding to the texture identifier from the texture information storage unit.

The filtering unit 790 maps the texture, fetched from the texture information fetching unit, to a corresponding primitive.

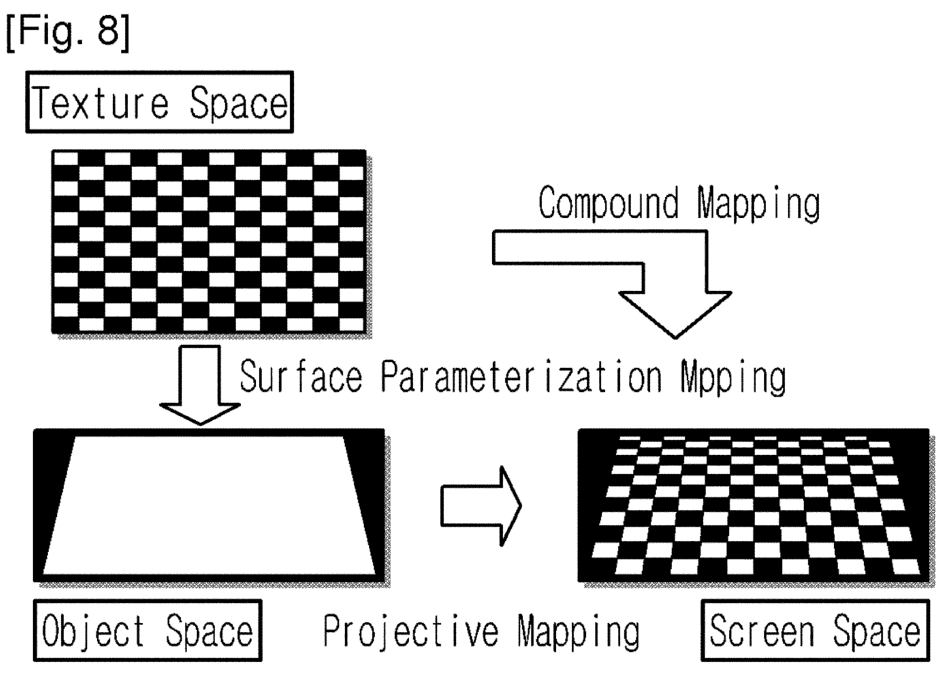

FIG. 8 is a diagram illustrating the texture mapping of a filtering unit of FIG. 7.

In FIG. 8, when a MIP-MAP is selected according to FIG. 4 or 6, a Texture Space", that is, the selected MIP-MAP, can be mapped to an "Object Space" and then finally mapped to a "Screen Space". The left of FIG. 8 can indicate the entire texture, and a black contour can indicate a quadrilateral whose corners are mapped to the respective points of the texture. When the quadrilateral is represented in a screen, the shape of the quadrilateral can be changed due to several conversions (e.g., rotation, transformation, reduction, and projection). After this conversion is performed, the texture MAP quadrilateral can be displayed in a screen as shown in a figure on the right of FIG. 8.

FIG. 9 is a diagram showing examples of a model used in the experiments of the method of selecting a MIP-MAP level of the disclosed technology.

Referring to FIG. 9, it can be seen that images to be subject to texture mapping processing have different selected MIP-MAPs depending on the distances on the respective spaces. In one embodiment, from FIGS. 9(a) and 9 (b), it can be expected that the length of a ray may become long because there are many reflected, refracted, or projected regions. From FIGS. 9(c) and 9(d), it can be expected that the length of a ray may be relatively short.

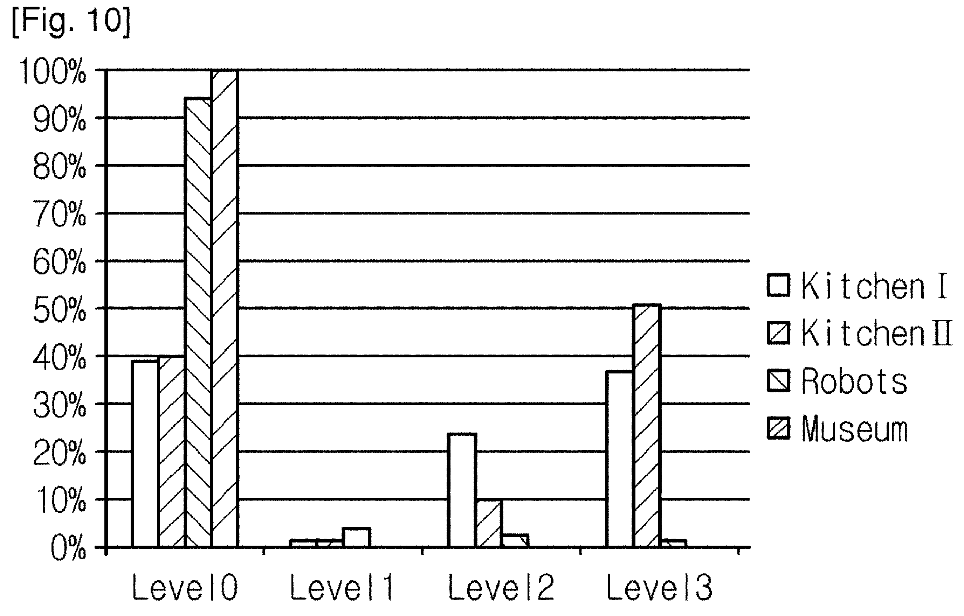

FIG. 10 is a graph showing the measurement of the selection ratio of a MIP-MAP level for each image in FIG. 9.

Referring to FIG. 10, it can be seen that FIGS. 9(a) and 9(b) have a relatively high selection ratio for a MIP-MAP having a high level and FIGS. 9(c) and 9(d) have a relatively high selection ratio for a MIP-MAP having a low level, as expected in FIG. 9.

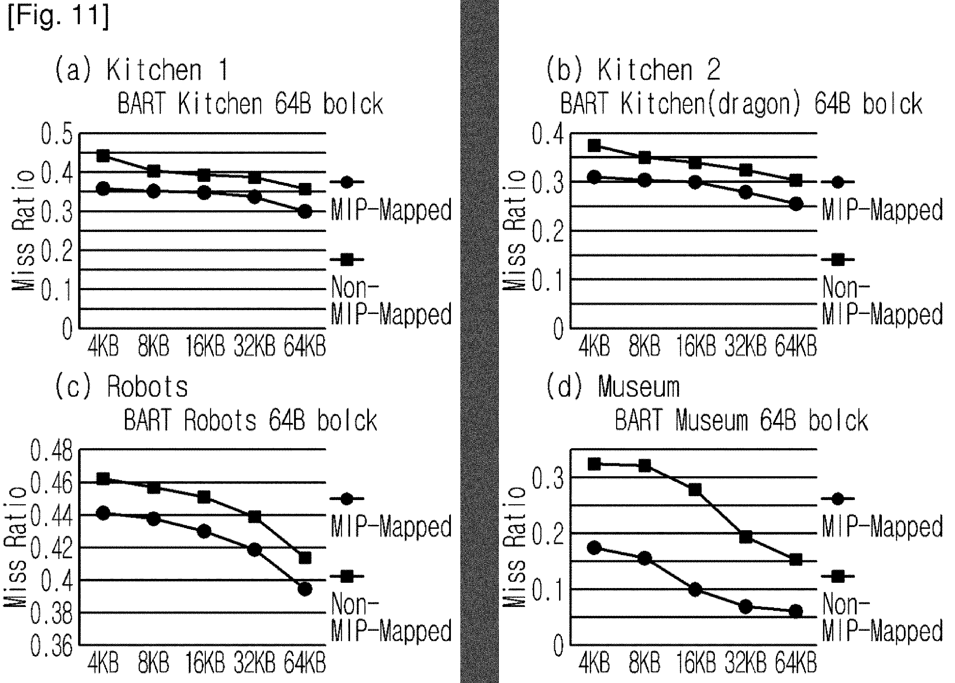

FIG. 11 is a graph showing the measurement of a cache miss rate for the size of a cache for each image in FIG. 9.

Referring to FIG. 11, as a result of experiments on the size of a cache for a bench mark for each of the images of FIG. 9, if the size of a block is 64 B and the shape of the cache is a direct-mapped cache, it can be seen that the cache miss rate is decreased according to an increase in the size of the cache for all the bench mark models.

FIG. 12 is a graph showing the measurement of a cache miss rate for the size of a block in each image of FIG. 9.

Referring to FIG. 12, as a result of experiments on the size of a block for a bench mark for each of the images of FIG. 9, if the size of the cache is 34 K and the shape of the cache is a direct-mapped cache, it can be seen that the cache miss rate is decreased according to an increase in the size of the block for all the bench mark models. Here, the unit of the block is a byte. In this case, the amount of data that must be moved between the cache and external memory is relatively increased.

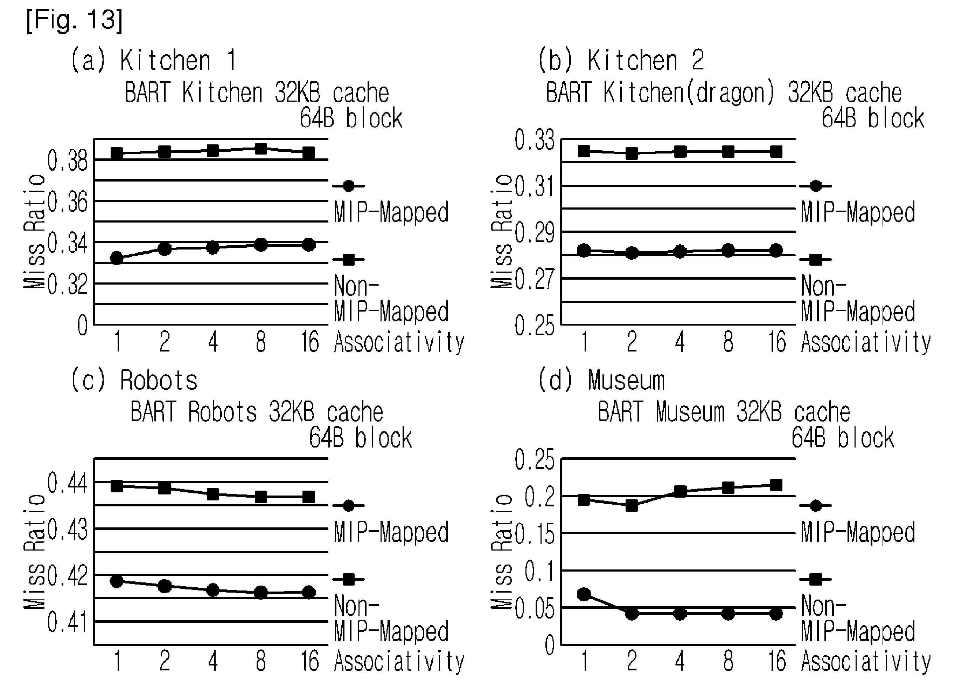

FIG. 13 is a graph showing the measurement of a cache miss rate for the association of the sizes of a cache and a block in each image of FIG. 9.

Referring to FIG. 13, as a result of experiments on association between a cache and a block for a bench mark for each of the images of FIG. 9, if the size of the cache is 32 KB and the size of the block is 64 B, it can be seen that the performance of the cache is constantly maintained.

The disclosed technology can have the following effects. However, it does not mean that a specific embodiment should include all the following effects or include only the following effects, and thus it should not be understood that the scope of the disclosed technology is restricted by them.

The method of selecting a MIP-MAP level in accordance with one embodiment can improve the speed of texture mapping. This is because a texture MIP-MAP for each primitive can be selected using a more efficient method.

Furthermore, the method of selecting a MIP-MAP level in accordance with one embodiment can reduce the miss rate of a direct-mapped cache. This is because an efficient MIP-MAP level can be selected and a texture level having a size most appropriate for a corresponding object when the object approaches texture data can be selected. Accordingly, reliability of the texture mapping system using the method of selecting a MIP-MAP level can be improved.

Furthermore, a variety of filtering schemes for putting a texture without distortion on an object that is inclined or rotated can be applied to the method of selecting a MIP-MAP level in accordance with one embodiment.

Although the preferred embodiments of this application have been described above, a person having ordinary skill in the art will appreciate that this application can be modified and changed in various ways without departing from the spirit and scope of this application which are written in the claims below.

**Claims**

1. A method of selecting a MIP-MAP level for a global illumination based texture mapping, the method comprising:

   (a) indentifying object information about at least one object in a screen, the object information including a number of the at least one object, shape(s) of the at least one object, material(s) of the at least one object in the screen and/or location(s) of a corresponding object on a space in the screen;
   (b) determining the MIP-MAP level selection algorithm based on the object information, the MIP-MAP level selection algorithm including a differential method and/or a distance measuring method, the differential method selecting a MIP-MAP based on differential values of adjacent rays and the distance measuring method selecting a MIP-MAP by calculating a distance in which a ratio of a pixel and a texel becomes 1:1; and
   (c) selecting a MIP-MAP level based on the determined method.

2. The method of claim 1, wherein the step (b) further comprises

   (b1) identifying demand levels of an image quality and/or a processing speed for an image to be provided; and
   (b2) determining the MIP-MAP level selection algorithm based on a result of the identification.

3. The method of claim 2, wherein the step (b2) comprises selecting the differential method as the MIP-MAP level selection algorithm when, as a result of the identification, the demand level of the image quality for a corresponding image is higher.

4. The method of claim 2, wherein the step (b2) comprises selecting the distance measuring method as the MIP-MAP level selection algorithm when, as a result of the identification, the demand level of the processing speed for a corresponding image is higher.

5. The method of claim 4, wherein the step (c) comprises

   (c1) calculating a size of a pixel for a texel based on a size of a texture and a size of a screen;
   (c2) calculating a number of texels included in a triangle based on texture coordinates corresponding to three vertexes of the triangle of the texture;
   (c3) calculating a size of the triangle based on the values calculated at the steps (c1)and (c2);
   (c4) calculating a size of a given triangle based on model coordinates corresponding to the three vertexes of the given triangle;
   (c5) calculating a distance in which a ratio of a pixel and a texel becomes 1:1 based on the values calculated at the steps (c3) and (c4); and
   (c6) selecting a MIP-MAP level based on the calculated distance.

6. The method of claim 5, wherein the step (c1) comprises calculating the size of the pixel for the texel according to Mathematical Equation below.

$$X_{PS} = \frac{Texture\ size}{Resolution}$$

Here, "$X_{PS}$" is the size of the texel for the pixel, "Texturesize" is the size of the texture, and "Resolution" is a size of a displayed screen.

**7.** The method of claim 5, wherein the step (c2) comprises calculating the number of texels included in the triangle according to Mathematical Equation below.

$$T_{XN}=\frac{((s_0 \cdot t_1)+(s_1 \cdot t_2)+(s_2 \cdot t_0)-(t_0 \cdot s_1)-(t_1 \cdot s_2)-(t_2 \cdot s_0))}{2} \cdot Texturesize$$

Here, "$T_{XN}$" is the number of texels included in the triangle, the texture coordinates of the triangle are $(s_0, t_0)$, $(s_1, t_1)$, and $(s_2, t_2)$, and "Texturesize" is the size of the texture.

**8.** The method of claim 5, wherein the step (c3) comprises calculating the size of the triangle according to Mathematical Equation below.

$$T_{XS}=T_{XN} \cdot X_{PS}$$

Here, "$T_{XS}$" is the size of the triangle including texels, "$T_{XN}$" is the number of the texels, and "$X_{PS}$" is the size of the pixel for the texel.

**9.** The method of claim 5, wherein the step (c4) comprises calculating the size of the triangle based on the model coordinates according to Mathematical Equation below.

$$(x_t,y_t,z_t)=\{(x_1,y_1,z_1)-(x_0,y_0,z_0)\}\times\{(x_2,y_2,z_2)-(x_0,y_0,z_0)\}$$

$$T_{area}=\sqrt{x_t^2+y_t^2+z_t^2}$$

Here, the model coordinates corresponding to the three vertexes of the given triangle are $(x_0, y_0, z_0)$, $(x_1, y_1, z_1)$, and $(x_2, y_2, z_2)$ and "$T_{area}$" is the size of the triangle.

**10.** The method of claim 5, wherein the step (c5) comprises calculating the distance in which a ratio of a pixel and a texel becomes 1 :1 according to Mathematical Equation below.

$$P_b=\sqrt{\frac{T_{XS}}{T_{area}}}$$

Here, $P_b$ is the distance in which a ratio of a pixel and a texel becomes 1:1, "$T_{XS}$" is the size of the triangle including texels, and "$T_{area}$" is the size of the triangle.

**11.** A texture mapping system using a method of selecting a MIP-MAP level, comprising:

an object information storage unit for storing object information about an object to be displayed in a screen, the object information including a number of the at least one object, shape(s) of the at least one object, material(s) of the at least one object in the screen and/or location(s) of a corresponding object on a space in the screen;
an object information identification unit for fetching object information about a target object to be displayed in the screen from the object information storage unit and identifying the fetched object;
an algorithm determination unit for analyzing the object information fetched from the object information identification unit and determining an algorithm for selecting a MIP-MAP level based on the analyzed object information;

a distance measuring method operation unit for receiving the object information of the target object from the object information identification unit and calculating a distance in which a ratio of a pixel and a texel becomes 1:1 according to a result of the determination of the algorithm determination unit; and

a MIP-MAP level selection unit for selecting the MIP-MAP level based on the distance calculated by the distance measuring method operation unit.

12. The texture mapping system of claim 11, wherein the distance measuring method operation unit calculates a size of a pixel for a texel based on a size of a texture and a size of a screen, calculates a number of texels included in a triangle based on texture coordinates corresponding to three vertexes of the triangle of the texture, calculates a size of the triangle based on the calculated size of the pixel and the calculated number of the texels, calculates a size of a given triangle based on model coordinates corresponding to the three vertexes of the given triangle, and calculates a distance in which a ratio of a pixel and a texel becomes 1:1 based on the two calculated values for the size of the triangle.

13. The texture mapping system of claim 11, further comprising a differential method operation unit for receiving the object information of the target object from the object information identification unit and calculating a differential value of a ray according to the determination of the algorithm determination unit, wherein the MIP-MAP level selection unit selects the MIP-MAP level based on the differential value calculated by the differential method operation unit.

14. The texture mapping system of claim 13, wherein the algorithm determination unit identifies demand levels of image quality and/or a processing speed for an image to be provided, selects the distance measuring method operation unit when the demand level of the processing speed is higher, and selects the differential method operation unit when the demand level of the image quality is higher.

15. A texture mapping system using a method of selecting a MIP-MAP level, comprising:

a pre-processing unit for calculating a comparison distance in which a ratio of a pixel and a texel becomes 1:1 by a distance measuring method;

a triangle information storage unit for mapping information about a primitive triangle to the comparison distance calculated by the pre-processing unit and storing the mapped information and comparison distance;

a comparison distance fetching unit for receiving a number of the primitive triangle to be subject to texture conversion and fetching a comparison distance of the primitive triangle corresponding to the corresponding number from the triangle information storage unit;

a ray information storage unit for accumulating and storing pieces of the information about a distance of a ray;

a final distance calculation unit for summing up a distance up to a triangle hit by a current ray from a staring point and the distance accumulated and stored in the ray information storage unit; and

a MIP-MAP level selection unit for selecting a MIP-MAP level based on the distance summed up by the final distance calculation unit.

16. The texture mapping system of claim 15, wherein the pre-processing unit calculates a size of a pixel for a texel based on a size of a texture and a size of a screen, calculates a number of texels included in a triangle based on texture coordinates corresponding to three vertexes of the triangle of the texture, calculates a size of the triangle based on the calculated size of the pixel and the calculated number of the texels, calculates a size of a given triangle based on model coordinates corresponding to the three vertexes of the given triangle, and calculates a distance in which a ratio of a pixel and a texel becomes 1:1 based on the two calculated values for the size of the triangle.

17. The texture mapping system of claim 15, further comprising:

a texture information storage unit for storing information about the texture;

a texture information fetching unit for receiving a texture identifier and fetching the information about the texture corresponding to the texture identifier from the texture information storage unit; and

a filtering unit for mapping the texture fetched by the texture information fetching unit to a corresponding primitive.

[Fig. 1]

100

110

```
┌─────────────────────────┐
│   OBJECT INFORMATION     │
│      STORAGE UNIT        │
└─────────────────────────┘
```

120

```
┌─────────────────────────┐
│   OBJECT INFORMATION     │
│       CHECK UNIT         │
└─────────────────────────┘
```

130

```
┌─────────────────────────┐
│       ALGORITHM          │
│   DETERMINATION UNIT     │
└─────────────────────────┘
```

140                                              150

```
┌──────────────────────────────┐    ┌──────────────────────────┐
│  DISTANCE MEASURING METHOD    │    │    RAY TRACING METHOD     │
│       OPERATION UNIT          │    │     OPERATION UNIT        │
└──────────────────────────────┘    └──────────────────────────┘
```

160

```
┌─────────────────────────┐
│      MIP-MAP LEVEL       │
│     SELECTION UNIT       │
└─────────────────────────┘
```

[Fig. 2]

```
┌─────────────────────────────────────────────────────────┐
│           Step of checking object information           │
│        on at least one object present in a screen       │──S210
└─────────────────────────────────────────────────────────┘
                            │
                            ▼
┌─────────────────────────────────────────────────────────┐
│     Step of selecting one of a differential method and/  │
│   or a distance measuring method as a MIP-MAP level      │──S220
│   selection algorithm based on the object information    │
└─────────────────────────────────────────────────────────┘
                            │
                            ▼
┌─────────────────────────────────────────────────────────┐
│            Step of selecting a MIP-MAP level            │──S230
│             based on the determined method             │
└─────────────────────────────────────────────────────────┘
```

EP 2 610 814 A1

[Fig. 3]

P: Primary Ray
F: Refraction Ray
R: Reflection Ray
S: Shadow Ray

[Fig. 4]

```
┌─────────────────────────────────────────────────────────────────┐
│ Step of checking a difference between any one ray and another    │
│ adjacent ray and calculating a crossing and the amount of        │──S410
│ a change for texture coordinates based on the checked difference │
└─────────────────────────────────────────────────────────────────┘
                              │
                              ▼
┌─────────────────────────────────────────────────────────────────┐
│ Step of calculating a differential value based on the crossing   │──S420
│ and the amount of a change for the texture coordinates           │
└─────────────────────────────────────────────────────────────────┘
                              │
                              ▼
┌─────────────────────────────────────────────────────────────────┐
│ Step of approximating the differential value                     │──S430
│ by expanding the differential value for a pixel                  │
└─────────────────────────────────────────────────────────────────┘
                              │
                              ▼
┌─────────────────────────────────────────────────────────────────┐
│ Step of defining a 2-dimensional image by a 3-dimensional texture│──S440
└─────────────────────────────────────────────────────────────────┘
                              │
                              ▼
┌─────────────────────────────────────────────────────────────────┐
│ Step of selecting a MIP-MAP having                               │──S450
│ a size close to the defined texture                              │
└─────────────────────────────────────────────────────────────────┘
```

[Fig. 5]

(a)

Basis texture

eye

$P_b$

$P$  $P'$

$P_t$

$P_s$

(b)

$dx$

P(x,y)

$dy$

PIXEL

Screen Space

$du$

$dv$

PIXEL

Texture Space

(c)

P(x,y)  A(x+1,y)

PIXEL

B(x,y+1)

Screen Space

$r_1$  $t_x$

$r_2$

PIXEL

$s_y$

Texture Space

[Fig. 6]

```
┌─────────────────────────────────────────────────────────┐
│        Step of calculating the size of a pixel for a texel        │  S610
│     based on the size of a texture and the size of a screen       │
└─────────────────────────────────────────────────────────┘
                              │
                              ▼
┌─────────────────────────────────────────────────────────┐
│       Step of calculating the number of texels included          │
│   in the triangle based on three coordinates corresponding       │  S620
│      to the three vertexes of the triangle of the texture        │
└─────────────────────────────────────────────────────────┘
                              │
                              ▼
┌─────────────────────────────────────────────────────────┐
│   Step of calculating the size of the triangle including texels   │  S630
│  based on the values calculated at the step S610 and the step S620│
└─────────────────────────────────────────────────────────┘
                              │
                              ▼
┌─────────────────────────────────────────────────────────┐
│  Step of calculating the size of the given triangle based on model │  S640
│   coordinates corresponding to the three vertexes of the triangle  │
└─────────────────────────────────────────────────────────┘
                              │
                              ▼
┌─────────────────────────────────────────────────────────┐
│         Step of calculating a distance in which a ratio of        │
│      a pixel and a texel becomes 1:1 based on the values          │  S650
│        calculated at the step S630 and the step S640             │
└─────────────────────────────────────────────────────────┘
                              │
                              ▼
┌─────────────────────────────────────────────────────────┐
│ Step of selecting a MIP-MAP level based on the calculated distance │  S660
└─────────────────────────────────────────────────────────┘
```

EP 2 610 814 A1

[Fig. 7]

[Fig. 8]

Texture Space

Compound Mapping

Surface Parameterization Mpping

Object Space     Projective Mapping     Screen Space

[Fig. 9]

(a) Kitchen 1

(b) Kitchen 2

(c) Robots

(d) Museum

[Fig. 10]

EP 2 610 814 A1

[Fig. 11]

(a) Kitchen 1

BART Kitchen 64B bolck

Miss Ratio — ● MIP-Mapped / ■ Non-MIP-Mapped
(4KB 8KB 16KB 32KB 64KB)

(b) Kitchen 2

BART Kitchen(dragon) 64B bolck

Miss Ratio — ● MIP-Mapped / ■ Non-MIP-Mapped
(4KB 8KB 16KB 32KB 64KB)

(c) Robots

BART Robots 64B bolck

Miss Ratio — ● MIP-Mapped / ■ Non-MIP-Mapped
(4KB 8KB 16KB 32KB 64KB)

(d) Museum

BART Museum 64B bolck

Miss Ratio — ● MIP-Mapped / ■ Non-MIP-Mapped
(4KB 8KB 16KB 32KB 64KB)

EP 2 610 814 A1

[Fig. 13]

(a) Kitchen 1
BART Kitchen 32KB cache
64B block

(b) Kitchen 2
BART Kitchen(dragon) 32KB cache
64B block

(c) Robots
BART Robots 32KB cache
64B block

(d) Museum
BART Museum 32KB cache
64B block

MIP-Mapped

Non-MIP-Mapped

EP 2 610 814 A1

## INTERNATIONAL SEARCH REPORT

| | International application No. |
| --- | --- |
| | **PCT/KR2010/005766** |

| A. CLASSIFICATION OF SUBJECT MATTER |
| --- |
| *G06T 15/50(2006.01)i, G06T 17/00(2006.01)i* |
| According to International Patent Classification (IPC) or to both national classification and IPC |

| B. FIELDS SEARCHED |
| --- |
| Minimum documentation searched (classification system followed by classification symbols) |
| G06T 15/50; G06F 15/16; G06T 15/60; G06T 17/00; G06T 1/20; G06T 15/00; G06F 12/08; A63F 13/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: pixel, texel, distance, triangle. |

| C. DOCUMENTS CONSIDERED TO BE RELEVANT | | |
| --- | --- | --- |
| Category* | Citation of document, with indication, where appropriate, of the relevant passages | Relevant to claim No. |
| A | KR 10-1998-0702804 A (SEIKO EPSON CORPORATION) 05 August 1998<br>See the entire document. | 1-17 |
| A | KR 10-2004-0080920 A (SONY CORPORATION) 20 September 2004<br>See the entire document. | 1-17 |
| A | KR 10-2008-0019119 A (SAMSUNG ELECTRONICS CO., LTD.) 03 March 2008<br>See abstract, [0104]-[0105], figures 11a-11b, claims 5-7. | 1-17 |
| A | JP 2007-141082 A (NAMCO BANDAI GAMES INC) 07 June 2007<br>See abstract, [0043]-[0048], figure 1, claims 1. | 1-17 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 MAY 2011 (25.05.2011) | **13 JUNE 2011 (13.06.2011)** |
| Name and mailing address of the ISA/KR<br>Korean Intellectual Property Office<br>Government Complex-Daejeon, 139 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

International application No.

**PCT/KR2010/005766**

| Patent document cited in search report | Publication date | Patent family member | Publication date |
|---|---|---|---|
| KR 10-1998-0702804 A | 05.08.1998 | EP 0813721 A1<br>EP 0813721 B1<br>JP 11-505644 A<br>US 05649173A A<br>US 05790134A A<br>WO 96-27857 A1 | 29.12.1997<br>02.06.1999<br>21.05.1999<br>15.07.1997<br>04.08.1998<br>12.09.1996 |
| KR 10-2004-0080920 A | 20.09.2004 | CN 1491401 A<br>CN 1491401 C0<br>EP 1460581 A1<br>EP 1460581 B1<br>JP 03-840966 B2<br>JP 2003-178294 A<br>US 2004-0111489 A1<br>US 7333115 B2<br>WO 03-050759 A1 | 21.04.2004<br>31.01.2007<br>22.09.2004<br>29.08.2007<br>01.11.2006<br>27.06.2003<br>10.06.2004<br>19.02.2008<br>19.06.2003 |
| KR 10-2008-0019119 A | 03.03.2008 | US 2008-0074415 A1 | 27.03.2008 |
| JP 2007-141082 A | 07.06.2007 | NONE | |

Form PCT/ISA/210 (patent family annex) (July 2009)